Europäisches Patentamt

European Patent Office

Office européen des brevets

(19)

(11) Numéro de publication: **0 187 060**
**B1**

## FASCICULE DE BREVET EUROPEEN

(12)

(45) Date de publication du fascicule du brevet:
**01.06.88**

(51) Int. Cl.⁴: **B 29 C 47/28**

(21) Numéro de dépôt: **85402226.6**

(22) Date de dépôt: **18.11.85**

(54) Tête d'extrusion rotative, notamment pour la fabrication de joncs à rainures hélicoidales pour fibres optiques.

(30) Priorité: **21.11.84 FR 8417735**

(43) Date de publication de la demande:
**09.07.86 Bulletin 86/28**

(45) Mention de la délivrance du brevet:
**01.06.88 Bulletin 88/22**

(84) Etats contractants désignés:
**DE GB IT NL SE**

(56) Documents cités:
**EP - A - 0 078 213**
**DE - A - 2 256 303**
**DE - C - 712 108**
**FR - A - 1 375 910**
**FR - A - 2 021 601**
**GB - A - 780 065**
**GB - A - 1 298 694**
**US - A - 1 883 531**
**US - A - 2 566 846**
**US - A - 4 332 480**

(73) Titulaire: **TREFICABLE PIRELLI, 1, rue des Usines,**
**F-94410 Saint Maurice (FR)**

(72) Inventeur: **Sebille, Michel, 14 rue Arago,**
**F-78420 Carrieres sur Seine (FR)**

(74) Mandataire: **Lepeudry-Gautherat, Thérèse et al,**
**ARMENGAUD JEUNE CABINET LEPEUDRY 6, rue du Fg.**
**St-Honoré, F-75008 Paris (FR)**

ACTORUM AG

## Description

La présente invention est relative à une tête d'extrusion rotative, notamment pour la fabrication de joncs à rainures hélicoïdales pour fibres optiques.

Dans l'industrie câblière, on utilise des extrudeuses pour former une gaine ou enveloppe de matière plastique autour d'une âme de câble, notamment métallique. Ces extrudeuses comportent une tête d'extrusion disposée d'équerre par rapport à l'axe de la trémie qui alimente cette tête en matière à extruder, la tête étant traversée longitudinalement par l'âme du câble à recouvrir et portant à l'une de ses extrémités une filière permettant d'obtenir le profil de gaine désiré.

Dans certains cas, la filière est montée rotative par rapport à la tête d'extrusion, notamment pour fabriquer des joncs à rainures hélicoïdales destinées à recevoir des fibres optiques.

Un premier type d'agencement connu, dans lequel cette filière rotative est entraînée à partir d'un mécanisme d'entraînement disposé à proximité immédiate de la filière, présente plusieurs inconvénients dont les suivants: l'accès à la filière pour son démontage s'en trouve limité; par ailleurs le chauffage de la filière n'est guère possible car le mécanisme d'entraînement n'est pas, a priori, susceptible de supporter des échauffements.

Selon un second type d'agencement connu, la filière est montée à l'une des extrémités d'un mandrin, lequel est entraîné en rotation à son autre extrémité par un mécanisme d'entraînement, et provoque la rotation de la filière: les inconvénients du premier type d'agencement sont supprimés.

Le second type d'agencement se retrouve par exemple dans le brevet britannique N° 780 065, dans lequel la filière 18 est seulement solidaire en rotation du mandrin 13 qui l'entraîne. On notera que le mandrin 13 n'est pas positionné en translation de façon précise. Par ailleurs, l'étanchéité entre le corps de la tête de filière et le mandrin ou la filière est assurée au moyen de garnitures non précisées.

En outre, il n'est pas prévu de moyens de réglage de l'étanchéité. Il n'est donc pas possible d'adapter cette étanchéité à des matières à extruder qui présentent des températures de mise en œuvre différentes, et provoquant des dilatations variables des pièces mécaniques. De plus, les jeux provenant de l'usure des garnitures, du mandrin et de la filière ne peuvent pas être compensés.

Un mandrin rotatif pour entraîner la filière est également révélé par le brevet allemand N° 712 108. Le mandrin b présente à ses deux extrémités des gorges hélicoïdales d destinées à refouler la matière à extruder vers la filière et assurer ainsi une étanchéité entre mandrin b et corps a.

Cependant, la seule action de refoulement ne peut garantir une bonne étanchéité. Par ailleurs, aucun réglage de l'étanchéité n'est prévu: il en résulte les inconvénients déjà cités.

Enfin, un autre mandrin rotatif pour entraîner la filière est connu par le brevet américain N° 2 566 846 qui a pour objet une tête d'extrusion du type énoncé dans le préambule de la revendication 1. Le problème de l'étanchéité n'y est même pas évoqué: il est vrai que la matière à extruder est distribuée de façon très localisée au moyen d'une gorge en hélice 22 et d'un orifice d'extrusion 25, et que cette matière est donc moins sujette à se disperser. De toutes façons, le mandrin ou vis 21 et le porte-filière 26 ne sont pas montés de façon réglable par rapport au corps: il s'ensuit que le serrage entre leurs surfaces respectives de contact, et donc l'étanchéité, n'est pas ajustable.

Tous ces systèmes connus, dans lesquels l'étanchéité est définie une fois pour toutes, sont donc peu pratiques d'emploi. L'invention vise au contraire à proposer une tête d'extrusion rotative dans laquelle l'étanchéité puisse être contrôlée, et éventuellement rectifiée, en permanence: seul un réglage manuel par le mécanicien surveillant la machine, et en cours de processus, est envisageable dans la pratique.

L'invention vise aussi à proposer une tête d'extrusion rotative dans laquelle les moyens d'entraînement en rotation de la filière et de réglage de l'étanchéité sont tous situés à l'opposé de la filière, pour les raisons évoquées précédemment.

L'invention concerne à cet effet une tête d'extrusion rotative, notamment pour la fabrication de joncs à rainures hélicoïdales pour fibres optiques, comportant un corps de tête pourvu d'une semelle permettant la fixation dudit corps à la sortie d'une extrudeuse et dans lequel sont pratiqués un évidement cylindrique traversant ledit corps de tête et un conduit d'alimentation en matière à extruder, qui s'étend entre la semelle et l'évidement cylindrique, un mandrin qui est monté à rotation dans l'évidement cylindrique et qui comporte des moyens d'immobilisaton en translation, un porte-filière rotatif, qui est fixé à une première extrémité du mandrin et qui prend appui sur le corps de tête, et un pignon ou une poulie fixé à la deuxième extrémité du mandrin, le mandrin et le porte-filière étant évidés axialement.

Selon l'invention, la tête d'extrusion comprend en outre des moyens pour modifier la position en translation du mandrin et régler ainsi le serrage du porte-filière sur le corps de tête, les moyens d'immobilisation et de modification de la position en translation du mandrin étant montés du côté de la deuxième extrémité de celui-ci et coopérant avec le corps de tête.

Avantageusement, le porte-filière rotatif s'appuie sur la face frontale du corps de tête par l'intermédiaire de deux bagues d'étanchéité métalliques juxtaposées.

Il est souhaitable que le mandrin comporte, en amont du conduit d'alimentation une portion pourvue d'un profil porteur en forme de vis sans fin qui est relié à ce conduit par un canal.

Selon un mode de réalisation préféré, les moyens d'immobilisation et de modification de la position en translation du mandrin comprennent au moins un roulement qui est porté de façon fixe en translation par un arbre fixé dans le prolongement de la deuxième extrémité du mandrin, et qui est monté dans un boîtier, ce boîtier étant immobilisé de façon réglable en translation par rapport au corps de tête au moyen de vis-entretoises et de vis de serrage et le pignon étant fixé à l'extrémité libre dudit arbre.

Avantageusement, le mandrin est monté dans l'évidement cylindrique du corps de tête par l'intermédiaire d'un fourreau monté fixe dans cet évidement cylindrique, et l'extrémité du fourreau située en regard du boîtier porte une bride avec laquelle coopèrent les vis du boîtier.

La tête d'extrusion pourra par ailleurs comporter les perfectionnements suivants:
- le boîtier est pourvu de cavités périphériques pour la circulation d'un fluide de refroidissement,
- le porte-filière présente des canaux annulaires périphériques débouchant par des canaux radiaux à l'intérieur du porte-filière.

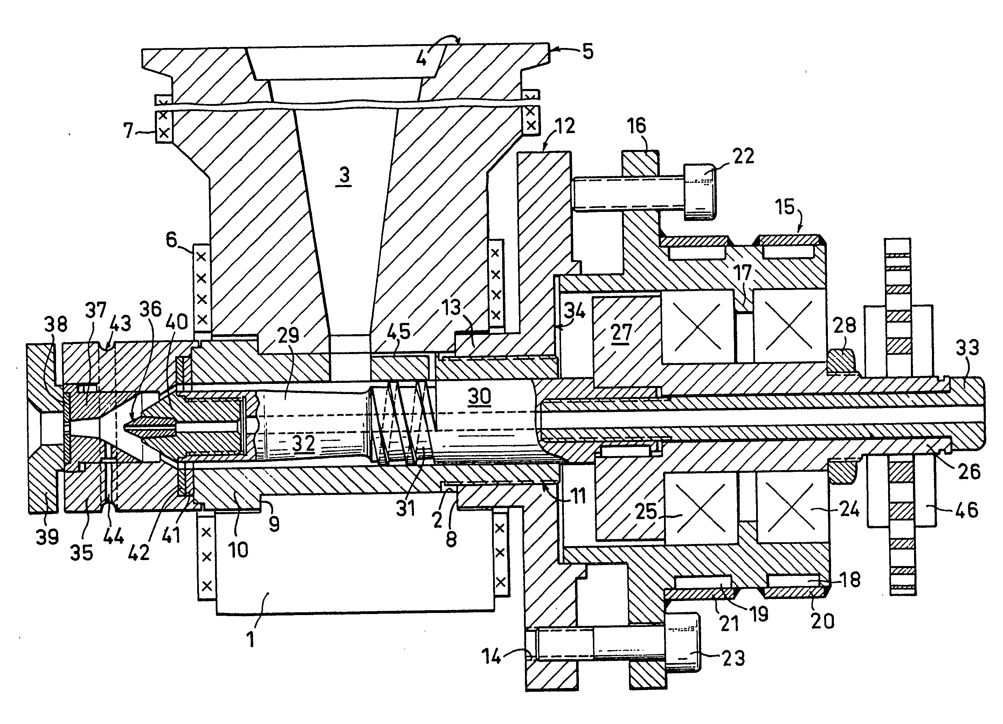

La description qui suit, et qui ne présente aucun caractère limitatif, doit être lue en regard de la figure unique représentant, en élévation et essentiellement en coupe, une tête d'extrusion rotative selon l'invention.

La tête d'extrusion représentée sur cette figure comporte un corps de tête 1 massif et généralement cylindrique, dans lequel sont pratiqués, d'une part, un évidement cylindrique 2 qui traverse le corps de tête 1 perpendiculaire à son axe, et d'autre part, un conduit axial 3 conique qui s'étend depuis l'évidement cylindrique 2 en s'évasant jusqu'à une semelle 4 du corps de tête 1. Cette semelle 4 est pourvue d'une collerette 5 permettant la fixation du corps de tête 1 à la sortie d'une extrudeuse. Le diamètre extérieur du corps de tête 1 est augmenté au voisinage de la semelle 4 où débouche le conduit conique 3. L'évidement cylindrique 2 présente, au voisinage de ses extrémités, deux épaulements 8, 9. Deux enveloppes cylindriques 6, 7 recouvrent la partie la plus importante de la surface extérieure du corps de tête 1; dans ces enveloppes sont noyées des résistances électriques permettant de chauffer, de façon connue, le corps de tête 1.

Un fourreau cylindrique creux 10 est monté sans jeu dans l'évidement cylindrique 2 du corps de tête 1 en dépassant de part et d'autre de cet évidement. Le fourreau 10 est épaulé au voisinage de l'une de ses extrémités pour s'appuyer sur l'un des épaulements, l'épaulement 9 selon le présent exemple de réalisation, de l'évidement cylindrique 2. L'autre extrémité du fourreau 10 présente un filetage 11.

Une bride 12 en forme de disque possède une ouverture circulaire en son centre, à partir de laquelle s'étend une portion de cylindre 13 taraudé intérieurement. La bride 12 possède aussi des trous taraudés 14 répartis à sa périphérie, et une cuvette centrale 34 du côté opposé au cylindre 13.

Le cylindre taraudé 13 se visse sur l'extrémité filetée du fourreau 10 et vient en butée sur l'épaulement correspondant 8 du corps de tête 1; la bride 12 et le fourreau 10 se trouvent ainsi fixés sur le corps de tête 1.

La tête d'extrusion comporte encore un boîtier 15 sous la forme générale d'un cylindre creux pourvu d'une collerette extérieure périphérique 16 présentant des trous traversants, ainsi que d'une nervure circulaire intérieure 17. En outre, des gorges périphériques circulaires 18, 19 sont pratiquées dans la surface extérieure du boîtier 15; elles sont fermées par des anneaux rapportés par soudage sur le boîtier 15, de façon à constituer des cavités destinées à recevoir un éventuel fluide réfrigérant.

Le boîtier 15 est fixé sur la bride 12 de la tête d'extrusion avec interposition de vis-entretoises 22 qui sont vissées dans la collerette 16 du boîtier et s'appuient sur la bride 12, et au moyen de vis de serrage 23 qui traversent librement la collerette 16 et qui sont vissées dans les trous taraudés 14 de la bride 12. L'extrémité du cylindre du boîtier se loge dans la cuvette 34 de la bride 12.

Dans le boîtier 15, et de part et d'autre de la nervure intérieure 17, sont montées à force les bagues extérieures de deux roulements 24, 25, par exemple de deux roulements à billes à contact oblique. Les bagues intérieures des deux roulements 24, 25 sont montées à force sur un arbre creux 26 dont une extrémité présente une collerette 27 qui s'appuie contre la bague intérieure du roulement 25 disposé en regard de la bride 12 de la tête d'extrusion, et dont l'autre extrémité porte un écrou 28 qui s'appuie contre la bague intérieure de l'autre roulement 24. Un pignon 46 destiné à être relié à un moteur est monté sur l'arbre creux 26, à proximité de l'écrou 28.

La tête d'extrusion comporte un mandrin 29 qui présente une portion 30 cylindrique montée ajustée à l'intérieur du fourreau 10, une portion 31 également ajustée et pourvue d'un profil porteur en forme de vis sans fin, et une portion 32 conique, de diamètre inférieur au diamètre intérieur du fourreau, s'évasant légèrement à partir de la portion précédente vers l'extrémité correspondante du fourreau 10. L'extrémité de la portion cylindrique 30 pénètre dans l'arbre creux 26 et elle présente à ce niveau une face épaulée par laquelle elle s'appuie sur la collerette 27 de cet arbre; elle est rendue solidaire en rotation de cet arbre par clavetage, et en translation au moyen d'une vis 33 qui traverse axialement l'arbre creux 26 et coopère avec un taraudage correspondant du mandrin 29.

La portion conique 32 du mandrin 29 reçoit à son extrémité libre, un porte-filière 35 qui porte de façon connue en soi, un outillage mâle 36 et un outillage femelle 37, une filière 38 et un écrou 39. Le porte-filière 35 est constitué par un cylindre creux dont une extrémité est prolongée par un noyau central 40 de plus petit diamètre, par lequel le porte-filière 35 est vissé dans un taraudage correspondant du mandrin 29, la matière à extruder circulant dans des canaux ménagés entre cylindre et noyau. L'outillage mâle 36 est porté par le noyau 40 et l'outillage femelle 37 directement par le cylindre du porte-filière 35, ces outillages délimitant un cône d'amenée de la matière à extruder vers la filière, l'outillage mâle 36 servant aussi à guider une âme de câble traversant l'ensemble de la tête d'extrusion. La filière 38 est constituée d'un disque perforé en son centre selon un motif désiré, qui prend appui sur l'outillage femelle 37 et est fixé par l'écrou 39.

Le porte-filière 35 rotatif s'appuie, sur la face frontale du fourreau 10 fixé, par l'intermédiaire de deux bagues d'étanchéité 41, 42 métalliques et juxtaposées, dont le serrage est assuré par les vis-entretoises 22. La surface extérieure du porte-filière 35 comporte un canal annulaire 43 relié par un canal radial 44 à la cavité intérieure du porte-filière 35; cet agencement permet le montage, sur le porte-filière 35, d'une éventuelle extrudeuse auxiliaire pour effectuer notamment des repérages par coloration de la matière à extruder.

La portion 31 à profil de vis sans fin est située axialement sur le mandrin 29 de façon que, lorsque celui-ci est en butée par son porte-filière 35 sur le corps de tête, elle soit en amont du conduit d'alimentation 3 par rapport à l'écoulement de la matière à extruder, c'est-à-dire entre l'ouverture débouchante de ce conduit et la portion cylindrique 30 du mandrin 29. Mais cette portion 31 à profil de vis sans fin doit cependant être située à proximité du conduit d'alimentation 3. En effet, la force transmise au mandrin 29 par la matière à extruder sous pression provenant du conduit d'alimentation 3 s'exerce au droit de ce conduit, sensiblement perpendiculairement au mandrin 29: cette force est avantageusement supportée en grande partie par la portion 31 à profil de vis sans fin.

On notera que l'extrémité du mandrin 29 recevant le porte-filière 35 n'est supportée radialement que par la matière à extruder sous pression.

Le fourreau 10 est pourvu d'un canal 45 qui comprend un segment périphérique parallèle à son axe et un segment radial, et qui permet de mettre en communication, le conduit 3 du corps de tête 1 et la zone amont de la portion 31 du mandrin 29 pourvue du profil de vis sans fin, ledit profil évacuant la matière à extruder provenant du canal 45 vers l'aval, c'est-à-dire vers la filière. Ce profil de guidage du mandrin 29 rotatif dans le fourreau fixe 10 est donc lubrifié par la matière à extruder.

Enfin, la vis 33 de fixation du mandrin 29, ce mandrin et le porte-filière 35 dans son ensemble sont évidés axialement pour autoriser le passage d'une âme de câble devant être recouverte par la matière à extruder.

On notera que le porte-filière 35 est très accessible, notamment pour son démontage mais aussi pour son chauffage au moyen, par exemple, d'un générateur d'air chaud thermorégulé.

En utilisation, lorsque la tête d'extrusion est alimentée par de la matière à extruder et que le mandrin 29 est mis en rotation, on ajuste le serrage du porte-filière 35 sur le fourreau 10 de façon que les fuites de matière entre ces deux pièces soient réduites à un niveau acceptable. Dans le même temps, ce serrage ne doit pas être trop élevé afin de ne pas augmenter de façon prohibitive le couple de rotation à transmettre au mandrin 29. Les vis-entretoises 22 et les vis de serrage 23 portées par le boîtier 15 permettent de modifier aisément la position en translation du mandrin 29 pour ajuster le serrage précité.

Cet agencement sera particulièrement apprécié dans le cas où l'on utilise une matière à extruder autodégradante, c'est-à-dire une matière qui se dégrade lorsqu'elle est immobilisée trop longtemps dans la zone très chaude du porte-filière 35: on provoquera alors une fuite contrôlée de matière entre le porte-filière 35 et le fourreau 10 afin d'assurer une circulation de matière en cet endroit.

Il est à noter que les roulements 24, 25 ne sont pas montés directement à l'extrémité du mandrin 29, mais par l'intermédiaire de l'arbre creux 26. De la sorte, les calories accumulées par le mandrin 29 ne sont que partiellement transmises à l'arbre creux 26, par l'intermédiaire de leurs surfaces en contact, lesquelles sont réduites. Ainsi, les roulements 24, 25 sont protégés de ces calories.

**Revendications**

1. Tête d'extrusion rotative, notamment pour la fabrication de joncs à rainures hélicoïdales pour fibres optiques, comportant un corps de tête (1) pourvu d'une semelle permettant la fixation dudit corps à la sortie d'une extrudeuse et dans lequel sont pratiqués un évidement cylindrique (2) traversant ledit corps de tête et un conduit d'alimentation en matière à extruder, qui s'étend entre ladite semelle (4) et ledit évidement cylindrique (2), un mandrin (29) qui est monté à rotation dans ledit évidement cylindrique (2) et qui comporte des moyens d'immobilisation en translation, un porte-filière rotatif (35) qui est fixé à une première extrémité dudit mandrin (29) et qui prend appui sur ledit corps de tête (1), et un pignon (46) ou une poulie fixé à la deuxième extrémité du mandrin (29), ledit mandrin (29) et ledit porte-filière (35) étant évidés axialement, caractérisée en ce qu'elle comprend des moyens (22, 23) pour modifier la position en translation dudit mandrin (29) et régler ainsi le serrage dudit porte-filière (35) sur ledit corps de tête (1), lesdits moyens (22, 23) d'immobilisation et de modification de la position en translation du mandrin (29) étant montés du côté de la deuxième extrémité de celui-ci et coopérant avec ledit corps de tête (1).

2. Tête selon la revendication 1, caractérisée en ce que ledit porte-filière rotatif s'appuie sur la face frontale dudit corps de tête par l'intermédiaire de deux bagues d'étanchéité métalliques juxtaposées (41, 42).

3. Tête selon la revendication 1 ou la revendication 2, caractérisée en ce que ledit mandrin (29) comporte, en amont dudit conduit d'alimentation (3) une portion (31) pourvue d'un profil porteur en forme de vis sans fin qui est relié audit conduit (3) par un canal (45).

4. Tête selon l'une quelconque des revendications 1 à 3, caractérisée en ce que lesdits moyens d'immobilisation et de modification de la position en translation du mandrin comprennent au moins un roulement (24) qui est porté de façon fixe en translation par un arbre (26) fixé dans le prolongement de ladite deuxième extrémité du mandrin (29), et qui est monté dans un boîtier (15), ledit boîtier étant immobilisé de façon réglable en translation par rapport au corps de tête (1) au moyen de vis-entretoises (22) et de vis de serrage (23), et ledit pignon (46) étant fixé à l'extrémité libre dudit arbre (26).

5. Tête selon la revendication 4, caractérisée en ce que ledit mandrin (29) est monté dans ledit évidement cylindrique (2) du corps de tête (1) par l'intermédiaire d'un fourreau (10) monté fixe dans ledit évidement cylindrique (2), et en ce que l'extrémité du fourreau (10) située en regard dudit boîtier (15) porte une bride (12) avec laquelle coopèrent lesdites vis (22, 23) du boîtier (15).

6. Tête selon l'une quelconque des revendications 4 et 5, caractérisée en ce que ledit boîtier (15) est pourvu de cavités périphériques (18, 19) pour la circulation d'un fluide de refroidissement.

7. Tête selon l'une quelconque des revendications 1 à 6, caractérisée en ce que ledit porte-filière (35) présente des canaux annulaires périphériques (43) débouchant par des canaux radiaux (44) à l'intérieur du porte-filière (35).

**Patentansprüche**

1. Drehbarer Extrudierkopf, insbesondere zur Herstellung kabelförmiger Träger mit Spiralnuten für optische Fasern, der ein Kopfgehäuse (1), an dem eine die Befestigung dieses Kopfgehäuses am Ausgang eines Extrudierers ermöglichende Sohlplatte vorgesehen ist und in dem eine dieses Kopfgehäuse durchquerende, zylindrische Ausnehmung (2) und ein Zuführkanal für das zu extrudierende Material vorgesehen sind, welcher sich zwischen der Sohlplatte (4) und der zylindrischen Ausnehmung (2) erstreckt, einen Kern (29), der drehbar in der zylindrischen Ausnehmung (2) angeordnet ist und Mittel für seine Fixierung gegen eine Translationsbewegung hat, einen drehbaren Düsenträger (35), der an einem ersten Endbereich des Kerns (29) fixiert ist und am Kopfgehäuse (1) anliegt und ein Ritzel (46) oder ein Scheibenrad aufweist, das am zweiten Endbereich des Kerns (29) befestigt ist, wobei der Kern (29) und der Düsenträger (35) axiale Durchlässe aufweisen, dadurch gekennzeichnet, dass der Extrudierkopf Mittel (22, 23) für die Veränderung der Längsposition des Kerns (29) und für das dadurch erfolgende Regeln der Anlagekraft des Düsenträgers (35) am Kopfgehäuse (1) aufweist, diese Mittel (22, 23) für die Immobilisierung und Veränderung der Längsposition des Kerns (29) sind an der Seite des zweiten Endbereichs des Kerns (29) vorgesehen und wirken zusammen mit dem Kopfgehäuse (1).

2. Extrudierkopf nach Anspruch 1, dadurch gekennzeichnet, dass der drehbare Düsenträger sich an der Frontfläche des Kopfgehäuses über zwei metallische, nebeneinander liegende Dichtringe (41, 42) abstützt.

3. Extrudierkopf nach Anspruch 1 oder 2, dadurch gekennzeichnet, dass der Kern (29) strömungsaufwärts des Zuführkanals (3) einen Bereich (31) aufweist, der ein Förderprofil in Form einer endlosen Schnecke hat und mit dem Zuführkanal (3) durch einen Kanal (45) verbunden ist.

4. Extrudierkopf nach einem der Ansprüche 1 bis 3, dadurch gekennzeichnet, dass die Mittel zum Immobilisieren und Veränderung der Längsposition des Kerns (29) an der Seite des zweiten Endbereichs des Kerns (29) mindestens ein Lager (24) aufweisen, das in Längsrichtung fixiert von einer Welle (26) getragen wird, die in einem Verlängerungsbereich des zweiten Endbereichs des Kerns (29) befestigt und in einem Gehäuse (15) angeordnet ist, das in Längsrichtung gegenüber dem Kopfgehäuse (1) verstellbar mittels Distanzschrauben (22) und Spannschrauben (23) fixiert ist, und dass das Ritzel am freien Endbereich dieser Welle (26) befestigt ist.

5. Extrudierkopf nach Anspruch 4, dadurch gekennzeichnet, dass der Kern (29) in der zylindrischen Ausnehmung (2) des Kopfgehäuses (1) mittels einer Hülse (10) montiert ist, die fest in der zylindrischen Ausnehmung (2) angeordnet ist, und dass der dem Gehäuse (15) zugewandte Endbereich dieser Hülse (10) einen Flansch (12) trägt, mit dem die Schrauben (22, 23) des Gehäuses (15) zusammenwirken.

6. Extrudierkopf nach einem der Ansprüche 4 und 5, dadurch gekennzeichnet, dass das Gehäuse (15) mit peripheren Hohlräumen (18, 19) für den Umlauf einer Kühlflüssigkeit versehen ist.

7. Extrudierkopf nach einem der Ansprüche 1 bis 6, dadurch gekennzeichnet, dass der Düsenträger (35) periphere ringförmige Kanäle (43) hat, die über Radialkanäle (44) in das Innere des Düsenträgers (35) münden.

**Claims**

1. Rotary extrusion head, especially for producing cable-like holders with helical grooves for optical fibres, comprising a head body (1) which is equipped with a sole piece allowing the said body to be fastened to the outlet of an extruder and in which are made a cylindrical recess (2) passing through the said head body and a conduit supplying material to be extruded, extending between the said sole piece (4) and the said cylindrical recess (2), a mandrel (29) mounted rotatably in the said cylindrical recess (2) and having means of immobilization in terms of translational movement, a rotary die base (35) fastened to a first end of the said mandrel (29) and bearing on the said head body (1), and a pinion (46) or a pulley fastened to the second end of the mandrel (29), the said mandrel (29) and the said die base (35) being recessed axially, characterized in that it possesses means (22, 23) for changing the position of the said mandrel (29) in terms of translational movement and thus adjusting the clamping of the said die base (35) on the said head body (1), the said means (22, 23) for immobilizing and changing the position of the mandrel (29) in terms of translational movement being mounted on the same side as the second end of the latter and interacting with the said head body (1).

2. Head according to Claim 1, characterized in that the said rotary die base bears on the front face of the said head body by means of two metal sealing rings (41, 42) placed next to one another.

3. Head according to Claim 1 or Claim 2, characterized in that the said mandrel (29) has, upstream of the said supply conduit (3), a portion (31) provided with a carrier profile in the form of an endless screw which is connected to the said conduit (3) via a duct (45).

4. Head according to any one of Claims 1 to 3, characterized in that the said means for immobilizing and changing the position of the mandrel in terms of translational movement comprise at least one bearing (24) which is carried fixedly in terms of translational movement by a shaft (26) fastened in the extension of the said second end of the mandrel (29) and which is mounted in a housing (15), the said housing being immobilized adjustably in terms of translational movement in relation to the head body (1) by means of spacer screws (22) and clamping screws (23), and the said pinion (46) being fastened to the free end of the said shaft (26).

5. Head according to Claim 4, characterized in that the said mandrel (29) is mounted in the said cylindrical recess (2) of the head body (1) by means of a sleeve (10) mounted fixedly in the said cylindrical recess (2), and in that the end of the sleeve (10) located opposite the said housing (15) carries a flange (12), with which the said screws (22, 23) of the housing (15) interact.

6. Head according to either one of Claims 4 and 5, characterized in that the said housing (15) is provided with peripheral cavities (18, 19) for the circulation of a cooling fluid.

7. Head according to any one of Claims 1 to 6, characterized in that the said die base (35) has peripheral annular ducts (43) opening onto the inside of the die base (35) via radial ducts (44).

0 187 060